# EUROPÄISCHE PATENTSCHRIFT

(11) **EP 0 551 258 B1**
(45) Veröffentlichungstag und Bekanntmachung des Hinweises auf die Patenterteilung: **26.04.1995**
(21) Anmeldenummer: 91903792.9
(22) Anmeldetag: 13.02.1991
(51) Int. Cl.: F24D 3/14, E04C 1/39

(54) **TEMPERIERBARE WAND**
HEATABLE WALL
MUR TEMPERE PAR CHAUFFAGE INTERIEUR

(30) Priorität: 15.02.1990 AT 354/90
(43) Veröffentlichungstag der Anmeldung: 21.07.1993
(73) Patentinhaber: Variotherm Heizsysteme Gesellschaft m.b.H., A-2544 Leobersdorf (AT); WATZEK, Wilhelm, A-2542 Kottingbrunn (AT)
(72) Erfinder: WATZEK, Wilhelm, A-2542 Kottingbrunn (AT); WATZEK, Alexander, A-2542 Kottingbrunn (AT)
(74) Vertreter: Rippel, Andreas, Dipl.-Ing.
(86) Internationale Anmeldenummer: AT9100026
(87) Internationale Veröffentlichungsnummer: WO9112466

(56) Entgegenhaltungen:
- DE-A- 2 508 020
- DE-U- 8 616 696

## Beschreibung

Die Erfindung bezieht sich auf eine temperierbare Wand, die aus Steinen aufgebaut ist, wobei die Steine an ihrer dem darüber liegenden Stein zugewendeten Seite eine Längsnut aufweisen, in der ein Wärmeleiter liegt.

Bei einer aus der DE-U-8 616 696 bekannten Wandheizung dieser Art weisen die Steine sowohl an ihrer Ober- als auch an ihrer Unterseite mittige Längsnuten auf, in die ein rohrförmiger Wärmeleiter eingelegt ist, derart, daß er als fremde Feder wirkt und die beiden aufeinander liegenden Steine miteinander verbindet. Derartige Wandheizungen haben sich bestens bewährt, weil einerseits eine äußerst angenehme Wärmewirkung erreicht wird, anderseits durch die Verwendung der Wärmeleiter als fremde Federn ein einfacher Aufbau der Wand möglich ist.

Die Erfindung hat es sich zum Ziel gesetzt, die bekannten Wände weiter in der Richtung zu verbessern, daß der Wärmeübergang von den Wärmeleitern zu den Steinen vergrößert wird, ohne daß das Ausrichten der Steine erschwert wird. Erreicht wird dies dadurch, daß diese Längsnut eine Tiefe aufweist, die größer als die Höhe des Wärmeleiters ist, sodaß der Wärmeleiter zur Gänze in der Längsnut liegt, und daß der darüber angeordnete Stein eine der tiefen Längsnut des unteren Steines gegenüber liegende seichte Längsnut besitzt. Durch Messungen bei umfangreichen Versuchen hat sich gezeigt, daß durch die erfindungsgemäße Maßnahme der Wärmeübergang gegenüber den bekannten Wandheizungen verbessert wird, was offenbar damit zusammenhängt, daß der Wärmeleiter zur Gänze im Stein eingebettet ist und nicht teilweise in die Fuge zwischen zwei Steinen ragt.

Anderseits wirkt der Wärmeleiter aber noch immer, wenn auch indirekt, als fremde Feder, da der Mörtel bzw. das den Wärmeleiter in der Längsnut umgebende Füllmaterial im Bereich der Längsnut zwangsläufig etwas höher ist und somit in die seichte Längsnut des darüber liegenden Steines eindringt.

Der Begriff "Wärmeleiter" umfaßt in vorliegender Beschreibung sowohl Leiter, die zur Erwärmung, als auch Leiter, die zur Kühlung des Raumes dienen. Es ist nämlich auch möglich, z.B. durch die als Rohre ausgebildeten Wärmeleiter gekühltes Wasser zu leiten, um so eine Raumkühlung hervorzurufen. Allerdings sollte dabei die Oberflächentemperatur der Wand nicht unter den Taupunkt der Luft absinken, weil sich sonst Feuchtigkeit an der Wand niederschlagen würde. Das Maß der Abkühlung der Wand wird sich daher nach den jeweiligen Temperatur- und Feuchtigkeitsverhältnissen richten. Bei entsprechender Ausbildung der Wand könnte allerdings auch die sich niederschlagende Feuchtigkeit in entlang der Wand verlaufenden Gefäßen gesammelt werden.

Eine weitere Verbesserung der Verwendungsfähigkeit einer erfindungsgemäßen Wand wird dadurch erreicht, daß die Steine einen zwischen den Längsnuten verlaufenden Installationskanal aufweisen. Dadurch kann die Wand auf einfache Weise nicht nur zur Temperierung des Raumes sondern auch zum Verlegen von Elektro- oder Sanitärinstallationen verwendet werden.

Besonders vorteilhaft hat es sich erwiesen, wenn die Wärmeleiter schlangenförmig in den Nuten der Steine verlaufen und zur Umlenkung der Wärmeleiter je ein Biegemodel vorgesehen ist, über das der Wärmeleiter, in einer Nut liegend, gebogen und mittels einer Spange festgehalten ist.

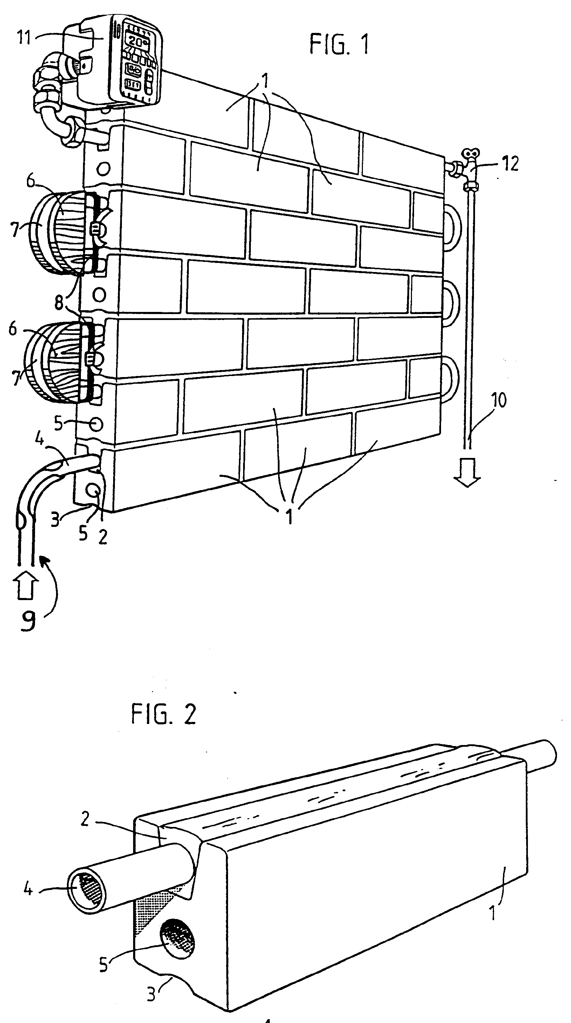

Nachstehend ist die Erfindung an Hand eines in den Zeichnungen dargestellten Ausführungsbeispieles näher beschrieben, ohne jedoch auf dieses Beispiel beschränkt zu sein. Dabei zeigt Fig.1 in schaubildlicher Ansicht, teilweise geschnitten eine erfindungsgemäße Wand und Fig.2 stellt in vergrößertem Maßstab einen Stein nach der Erfindung dar.

Gemäß Fig.2 weist ein quaderförmiger Stein 1 an seiner einen Längs-Schmalseite eine tiefe Längsnut 2 und an seiner gegenüberliegenden Längs-Schmalseite eine seichte Längsnut 3 auf. In die tiefe Längsnut 2 ist ein im Beispiel rohrförmiger Wärmeleiter 4 eingebettet. Zwischen den beiden Längsnuten 2 und 3 erstreckt sich ein Installationskanal 5.

Die temperierbare Wand nach Fig.1 ist aus Steinen 1 gemäß Fig.2 aufgebaut. Wie ersichtlich, verlaufen die Wärmeleiter 4 schlangenförmig in den Nuten 2 der Steine 1, wobei zur Umlenkung der Wärmeleiter 4 je ein Biegemodel 6 vorgesehen ist, über das der Wärmeleiter 4, in einer Nut 7 liegend, gebogen und mittels einer Spange 8 festgehalten ist. Die Bögen mit dem Model 6 können mit U-förmigen Hohlziegeln vermauert oder mit Holzleisten verblendet werden. Die Models 6 können z.B. aus Holz oder Kunststoff bestehen.

Die Wärmeleiter 4, z.B. Kunststoff- oder Kupferrohre werden beim Aufbau der Wand in der Nut 2 eingemörtelt. Dabei ergeben sich kleine Erhöhungen im Bereich der Nuten 2 (Fig.2), die beim Aufsetzen des darüber liegenden Steines in dessen seichte Längsnut 3 eingreifen. Es wird derart auf einfache Weise ein sicherer Verband der einzelnen Steine in der Wand erreicht.

Aus Fig.1 ist noch ersichtlich, daß das Heizungs- oder Kühlwasser vom Vorlauf 9 in die Wand eintritt und über den Rücklauf 10 austritt. Eine Temperaturregelung erfolgt über einen Thermostat 11, eine Entlüftung über einen Entlüftungswinkel 12. Soll die Wand als Kühlwand benutzt werden, könnte auch die Anordnung eines Hygrostaten zweckmäßig sein.

Der Wärmeleiter muß nicht als Rohr ausgebildet sein, es könnte auch ein elektrischer Heizleiter verwendet werden. Als Material für die Steine 1 wird vorzugsweise ein gut wärmeleitendes und wärmespeicherfähiges keramisches Material verwendet. Es können jedoch auch andere Materialien Verwendung finden.

## Patentansprüche

1. Temperierbare Wand, die aus Steinen aufgebaut ist, wobei die Steine an ihrer dem darüber liegenden Stein zugewendeten Seite eine Längsnut aufweisen, in der ein Wärmeleiter liegt, dadurch gekennzeichnet, daß diese Längsnut (2) eine Tiefe aufweist, die größer als die Höhe des Wärmeleiters (4) ist, so daß der Wärmeleiter (4) zur Gänze in der Längsnut (2) liegt, und daß der darüber angeordnete Stein (1) eine der tiefen Längsnut (2) des unteren Steines (1) gegenüber liegende seichte Längsnut (3) besitzt.

2. Wand nach Anspruch 1, dadurch gekennzeichnet, daß die Steine (1) einen zwischen den Längsnuten (2,3) verlaufenden Installationskanal (5) aufweisen.

3. Wand nach Anspruch 1 oder 2, dadurch gekennzeichnet, daß die Wärmeleiter (4) schlangenförmig in den Nuten (2) der Steine (1) verlaufen und zur Umlenkung der Wärmeleiter (4) je ein Biegemodel (6) vorgesehen ist, über das der Wärmeleiter (4), in einer Nut (7) liegend, gebogen und mittels einer Spange (8) festgehalten ist.

## Claims

1. Heatable wall made of stones, each of which has a longitudinal groove in the face nearer the stone immediately above it, with a thermal conductor located in the groove, **characterized in that** this longitudinal groove (2) is of a depth greater than the height of the thermal conductor (4) so that the thermal conductor (4) is fully inserted in the longitudinal groove (2), and in that the stone (1) immediately above has a shallow longitudinal groove (3) opposite the deep longitudinal groove (2) in the stone (1) below.

2. Heatable wall according to Claim 1, **characterized** **in that** the stones (1) have an installation channel (5) running between the longitudinal grooves (2, 3).

3. Heatable wall according to Claim 1 or 2, **characterized in that** the thermal conductors (4) run in serpentine fashion in the grooves (2) of the stones (1), and in that each thermal conductor (4) is deflected by a bending module (6) by means of which the thermal conductors (4), running in a groove (7), are bent and held in place with a cramp (8).

## Revendications

1. Mur chauffable, fait de pierres, dans lequel chaque pierre présente une rainure longitudinale dans la face plus proche de la pierre directement au-dessus, et où cette rainure contient un conducteur de la chaleur, **caracterisé en ce que** cette rainure longitudinale (2) est d'une profondeur plus grande que la hauteur du conducteur de la chaleur (4) de façon que le conducteur de la chaleur (4) soit entièrement inséré dans la rainure longitudinale (2), et que la pierre (1) directement au-dessus présente une rainure longitudinale (3) peu profonde opposé à la rainure longitudinale (2) profonde de la pierre (1) au-dessous.

2. Mur selon revendication 1, **caracterisé en ce que** les pierres (1) présentent un canal d'installation (5) qui passe entre les rainures longitudinales (2, 3).

3. Mur selon revendication 1 ou 2, **caraterisé en ce que** les conducteurs de la chaleur (4) passent dans les rainures (2) des pierres (1) de façon serpentine, et qu'un module de pliage (6) par lequel les conducteurs de la chaleur (4), insérés dans une rainure (7), sont pliés et tenus à l'aide d'une pince (8) renvoie chaque conducteur de la chaleur (4).
